# EUROPÄISCHE PATENTSCHRIFT

(11) **EP 0 563 158 B1**
(45) Veröffentlichungstag und Bekanntmachung des Hinweises auf die Patenterteilung: **13.09.1995**
(21) Anmeldenummer: 92901506.3
(22) Anmeldetag: 18.12.1991
(51) Int. Cl.: G21C 1/09

(54) **ANORDNUNG ZUR DRUCKABSICHERUNG EINES DRUCKBEHÄLTERS**
SAFETY-VALVE UNIT FOR A PRESSURIZED CONTAINER
DISPOSITIF POUR ASSURER LA RESISTANCE A LA PRESSION D'UN RECIPIENT SOUS PRESSION

(30) Priorität: 21.12.1990 DE 4041418
(43) Veröffentlichungstag der Anmeldung: 06.10.1993
(73) Patentinhaber: SIEMENS AKTIENGESELLSCHAFT, 80333 München (DE)
(72) Erfinder: DROSSEL, Rolf, D-8520 Erlangen (DE); LAURER, Erwin, D-8521 Möhrendorf (DE)
(86) Internationale Anmeldenummer: DE9100991
(87) Internationale Veröffentlichungsnummer: WO9211639

(56) Entgegenhaltungen:
- FR-A- 1 445 880
- US-A- 3 084 706
- US-A- 3 095 012
- WORLD PATENTS INDEX Section Ch, Week 7846, 9. Dezember 1977, Derwent Publications Ltd., London, GB; Class C, AN 78-K1487A & SU-A-586 290

## Beschreibung

Die Erfindung bezieht sich auf eine Anordnung zur Druckabsicherung eines Druckbehälters, insbesondere für eine Druckhaltestation im Primärkreis eines Druckwasserreaktors.

Der im Primärkreis eines Druckwasserreaktors herrschende Betriebsdruck, beispielsweise etwa 155 bar, darf nicht wesentlich überschritten werden, um eine Überbeanspruchung der Primärkreiskomponenten zu vermeiden, wenn die im Inneren des Reaktordruckbehälters freigesetzte Wärme durch das Kühlmittel nicht in ausreichendem Umfang abgeführt werden kann.

Um den Druck innerhalb des Primärkreises unterhalb des zulässigen Maximaldruckes, beispielsweise etwa 170 bar, zu halten, sind sogenannte Druckhaltestationen vorgesehen, die einen an den Primärkreis angeschlossenen Druckhalter umfassen, der über eine Ventilanordnung an eine Ausblaseleitung angeschlossen ist. Die Armatur ist in der Regel ein durch das im Druckhalter befindliche Medium betätigtes Sicherheitsventil. Das Sicherheitsventil kann hierzu durch einen mit Druck beaufschlagbaren und in einem Zylinder verschiebbar angeordneten Kolben geöffnet werden. Die Druckbeaufschlagung erfolgt über eine an den Druckhalter angeschlossene Druckentnahmeleitung, die über ein Steuerventil an den Steuerraum des Zylinders angeschlossen ist. Über diese Druckentnahmeleitung wird im Bedarfsfall der im Druckhalter herrschende statische Druck bei geöffnetem Steuerventil auf den Kolben des Sicherheitsventils geleitet und bewirkt ein Öffnen des Sicherheitsventils.

In der Druckentnahmeleitung herrscht immer der Innendruck des Druckhalters. Im Ansprechfall ist zusätzlich die zwischen dem Steuerventil und dem Zylinder des Sicherheitsventils angeordnete Steuerleitung ebenfalls mit Hochdruck beaufschlagt. Aus Gründen der Redundanz sind für ein Sicherheitsventil mehrere, beispielsweise vier, voneinander unabhängig arbeitende Steuerventile vorgesehen. Die hierzu erforderlichen Rohrleitungen stellen jedoch im Falle eines Berstens einen zusätzlichen Risikofaktor dar.

Der Erfindung liegt nun die Aufgabe zugrunde, eine Anordnung zur Druckabsicherung eines Druckbehälters anzugeben, bei dem dieser Nachteil vermieden ist.

Die genannte Aufgabe wird gemäß der Erfindung mit einer Anordnung zur Druckabsicherung eines Druckbehälters gelöst, die eine Ventilanordnung mit wenigstens einem über ein aus dem Druckbehälter herangeführtes Medium hydraulisch betätigbaren Sicherheitsventil enthält, wobei zum Heranführen des Mediums an das Sicherheitsventil Leitungen vorgesehen sind, die abschnittsweise innerhalb des Druckbehälters, eines Stutzens und eines von der Ventilanordnung gebildeten und unmittelbar am Stutzen angeordneten Gehäuseblockes geführt sind.

Die Druckentnahmeleitung und die an sie angeschlossene Steuerleitung verlaufen vollständig innerhalb einer kompakten Gehäuseeinheit, die durch den Druckbehälter, den Stutzen und den Gehäuseblock der Ventilanordnung gebildet ist. Da die das Sicherheitsventil enthaltende Ventilanordnung direkt und ohne Zwischenschaltung von freiliegenden Rohrleitungen an einem Stutzen des Druckbehälters angeordnet ist und die Druckentnahmeleitungen sowie die Steuerleitungen in Gestalt von innerhalb des Druckbehälters und des Stutzens, bzw. innerhalb des Gehäuseblockes der Ventilanordnung angeordneten Kanälen ausgeführt sind, ist ein Bruch der Druckentnahme- und der Steuerleitungen praktisch ausgeschlossen. Außerdem wird eine kompakte Gestaltung der gesamten Anordnung ermöglicht.

Vorzugsweise sind zur hydraulischen Betätigung des Sicherheitsventils innerhalb des Druckbehälters und des Stutzens Mittel zur Entnahme des vom Strömungsvorgang während des Abblasens unbeeinflußten statischen Behälterdruckes vorgesehen, und die Mittel zur Druckentnahme sind direkt an einen im Gehäuseblock verlaufenden Druckentnahmekanal angeschlossen.

In einer weiteren bevorzugten Ausführungsform ist ein rohrförmig verlängerter Stutzen vorgesehen, der mit einer Druckentnahmeöffnung versehen ist, die durch eine in das Innere des Druckhalters führende Manschette vom Strömungskanal des auszublasenden Mediums räumlich getrennt ist. Durch diese Maßnahme ist gewährleistet, daß stets der volle im Inneren des Druckbehälters herrschende statische Druck zur Betätigung des Steuerventils und damit im Steuerraum des Sicherheitsventils auch dann zur Verfügung steht, wenn der Druck im Strömungskanal durch den einsetzenden Abblasevorgang absinkt.

Eine Instabilität des Steuerventils und damit des Sicherheitsventils wird dadurch vermieden.

In einer bevorzugten Ausgestaltung der Erfindung ist die Ventilanordnung radial am rohrförmig verlängerten Stutzen angeordnet. Zur Erhöhung der Redundanz können dadurch mehrere baugleiche Ventilanordnungen sternförmig am Stutzen angeordnet werden.

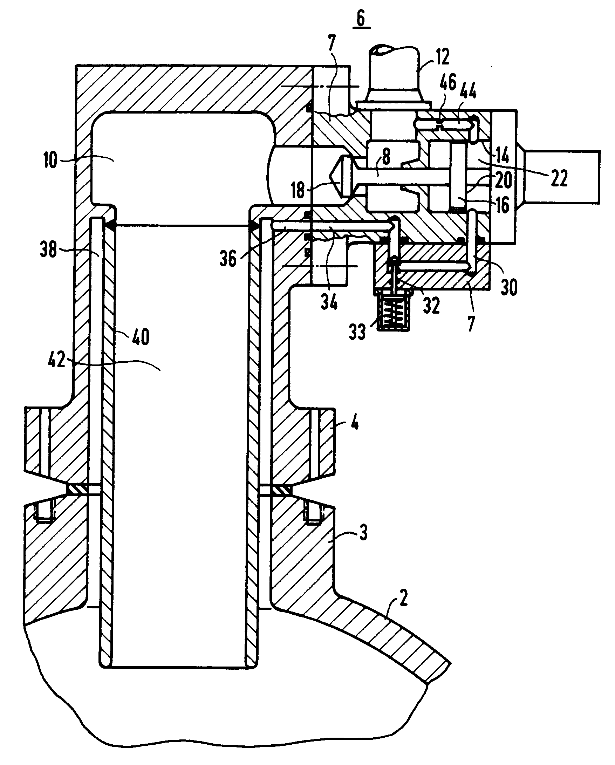

Zur weiteren Erläuterung der Erfindung wird auf das Ausführungsbeispiel der Zeichnung verwiesen, in deren einziger Figur eine erfindungsgemäße Anordnung zur Druckabsicherung eines Druckbehälters schematisch in einem Schnitt veranschaulicht ist.

Entsprechend der **Figur** ist ein Druckbehälter 2 mit einem beispielsweise zylindrischen Stutzen 4 versehen, an dem direkt eine mehrere Ventile enthaltende Ventilanordnung 6 mit ihrem Gehäuseblock 7 radial angeflanscht ist. Der Gehäuseblock 7 kann aus mehreren Gehäuseteilen zusammengesetzt sein. Der Stutzen 4 ist im Beispiel der Figur an einen kurzen Stutzen 3 des Druckbehälters 2 angeflanscht. Der Stutzen 4 kann jedoch auch direkt an den Druckbehälter 2 angeschweißt sein.

Die Ventilanordnung 6 verbindet den Innenraum des Druckbehälters 2 über den Stutzen 4 und ein Sicherheitsventil 8 mit einer Ausblaseleitung 12. Das Sicherheitsventil 8 enthält einen in einem Zylinder 14 beweglichen Kolben 16, der auf seiner von einem Verschlußstück 18 abgewandten Fläche 20 mit Druck beaufschlagt werden kann.

Bei Druckbeaufschlagung mit einem Druck, der beispielsweise dem statischen Druck im Druckbehälter 2 entspricht, bewegt sich aufgrund der gegenüber dem Verschlußstück 18 größeren wirksamen Fläche 20 des Kolbens 16 im Beispiel der Figur das Verschlußstück 18 nach links und öffnet den Innenraum 10 des Stutzens 4 zur Ausblaseleitung 12. Die Druckbeaufschlagung des Kolbens 16 erfolgt im Ansprechfall durch das im Druckbehälter 2 befindliche Medium. Der Steuerraum 22 des Zylinders 14 ist zu diesem Zweck an einen Steuerkanal 30 angeschlossen, der über ein Steuerventil 32 mit einem Druckentnahmekanal 34 in Verbindung steht. Steuerkanal 30 und Druckentnahmekanal 34 verlaufen beispielsweise in Form von Bohrungen innerhalb des Gehäuseblockes 7 der Ventilanordnung 6, so daß keine freien Rohrleitungen erforderlich sind.

Die Druckentnahmeleitung 34 ist an eine im Stutzen 4 befindliche Druckentnahmeöffnung 36 angeschlossen. Die Druckentnahmeöffnung 36 führt in einen ringförmigen Innenraum 38, der durch eine Manschette 40 vom zur Ausblaseleitung 12 führenden Strömungskanal 42 getrennt ist. Die hohlzylindrische Manschette 40 erstreckt sich bis in das Innere des Druckhalters 2, so daß der an der Druckentnahmeöffnung 36 anstehende Druck dem im Druckbehälter 2 herrschenden Druck auch dann entspricht, wenn beim Ansprechen des Sicherheitsventils 8 der Strömungskanal 42 vom Druckmedium durchströmt wird.

Das Steuerventil 32, das beispielsweise über eine Druckfeder 33 auf einen beispielsweise etwa 170 bar entsprechenden Druck vorgespannt ist, bleibt bei Überschreiten dieses Druckes im Druckhalter 2 zuverlässig geöffnet, da die innerhalb der Manschette 40 und im Innenraum 10 des Stutzens 4 einsetzende Strömung ohne Einfluß auf den in der Druckentnahmeleitung 34 herrschenden Druck ist.

Nach Erreichen des Schließdruckes, der z.B. 10 % unter dem Ansprechdruck liegen kann, schließt das Steuerventil 32 und der mit Druck beaufschlagte Steuerraum 22 des Zylinders 14 wird über einen mit einer Drossel 44 versehenen Entlüftungskanal 46 in die Ausblaseleitung 12 entlüftet.

Im Beispiel der Figur ist eine Armatur 6 mit nur einem Steuerkanal 30, einem Steuerventil 32 und einem Druckentnahmekanal 34 dargestellt. Aus sicherheitstechnischen Gründen können jedoch in der Armatur 6 mehrere Druckentnahmekanäle 34 sowie Steuerventile 32 und Steuerkanäle 30 vorgesehen sein. Darüber hinaus kann jeder Steuerkanal 30 und jeder Druckkanal 34 zusätzlich mit handbetätigbaren Ventilen versehen sein, um beispielsweise ein während des Betriebes undicht gewordenes Steuerventil 32 wegzuschalten und dafür ein bis dahin in Reserve gehaltenes abgesperrtes Steuerventil zuzuschalten.

Die in der Figur dargestellte bevorzugte Ausführungsform ermöglicht durch die rohrförmig verlängerte Gestaltung des Stutzens 4 die sternförmige Anbringung mehrerer baugleicher Ventilanordnungen. Dadurch wird die Redundanz beträchtlich erhöht.

Bei geringeren Sicherheitsanforderungen ist ein verlängerter Stutzen 4 nicht erforderlich, und die Ventilanordnung 6 kann direkt auf die Stirnseite des kurzen Stutzens 3 angeordnet werden.

Zur Entnahme des statischen Druckes kann auch anstelle eines ringförmigen Kanals gemäß dem in der Figur dargestellten Ausführungsbeispieles eine oder mehrere am Druckentnahmekanal 34 der Ventilanordnung 6 angeschlossene und innerhalb des Druckbehälters 2 in eine von der Strömung im wesentlichen unbeeinflußte Zone führende Kanäle vorgesehen sein.

## Patentansprüche

1. Anordnung zur Druckabsicherung eines Druckbehälters (2), die eine Ventilanordnung (6) mit wenigstens einem über ein aus dem Druckbehälter (2) herangeführtes Medium hydraulisch betätigbaren Sicherheitsventil (8) enthält, wobei zum Heranführen des Mediums an das Sicherheitsventil (8) Leitungen (30, 34, 38) vorgesehen sind, die abschnittsweise innerhalb des Druckbehälters (2), eines Stutzens (4) und eines von der Ventilanordnung (6) gebildeten und unmittelbar am Stutzen angeordneten Gehäuseblockes (7) geführt sind.

2. Anordnung nach Anspruch 1, **dadurch gekennzeichnet**, daß die innerhalb des Druckbehälters (2) und des Stutzens (4) zur Druckentnahme vorgesehene Leitung (38) in einen Bereich des Druckbehälters (2) mündet, in der ein vom Strömungsvorgang während des Abblasens im wesentlichen unbeeinflußter statischer Behälterdruck vorliegt.

3. Anordnung nach Anspruch 2 mit folgenden Merkmalen:
a) Der Stutzen (4) ist rohrförmig verlängert,
b) eine im Stutzen (4) angeordnete Druckentnahmeöffnung (36) ist direkt an einen im Gehäuseblock (7) verlaufenden Druckentnahmekanal (34) angeschlossen,
c) innerhalb des Stutzens (4) verläuft ein Strömungskanal (42) für das auszublasende Medium, der durch eine in das Innere des Druckbehälters (2) führende Manschette (40) von der Druckentnahmeöffnung (36) räumlich getrennt ist.

4. Anordnung nach Anspruch 3, **dadurch gekennzeichnet,** daß die Ventilanordnung (6) radial am rohrförmig verlängerten Stutzen (4) angeflanscht ist.

5. Anordnung nach Anspruch 4, **dadurch gekennzeichnet,** daß mehrere Ventilanordnungen (6) radial am Stutzen (4) angeflanscht sind.

## Claims

1. Arrangement for securing the pressure of a pressure container (2), which arrangement contains a valve arrangement (6) with at least one safety valve (8) hydraulically operable by way of a medium led from the pressure container (2), whereby to lead the medium to the safety valve (8) lines (30, 34, 38) are provided, which are guided in sections within the pressure container (2), a connection piece (4) and a housing block (7) formed by the valve arrangement (6) and arranged directly on the connection piece.

2. Arrangement according to claim 1,
characterized in that the line (38) provided within the pressure container (2) and the connection piece (4) for pressure removal opens into a region of the pressure container (2) in which there is a static container pressure which is substantially uninfluenced by the flow configuration during the blowing-off.

3. Arrangement according to claim 2, having the following features:
a) the connection piece (4) is extended in the shape of a pipe,
b) a pressure-removal opening (36) arranged in the connection piece (4) is connected directly to a pressure-removal channel (34) extending in the housing block (7),
c) within the connection piece (4) a flow channel (42) extends for the medium to be blown out, which channel is spatially separated from the pressure-removal opening (36) by a sleeve (40) leading into the interior of the pressure container (2).

4. Arrangement according to claim 3,
characterized in that the valve arrangement (6) is radially flange-connected to the connection piece (4) which is extended in the shape of a pipe.

5. Arrangement according to claim 4,
characterized in that several valve arrangements (6) are radially flange-connected to the connection piece (4).

## Revendications

1. Dispositif pour assurer la résistance à la pression un récipient sous pression (2) qui comporte un dispositif de soupape (6) pourvu d'au moins une soupape de sécurité (8) pouvant être actionnée hydrauliquement par l'intermédiaire d'un fluide appliqué à partir du récipient sous pression (2), et dans lequel, pour l'amenée du fluide à la soupape de sécurité (8), sont prévues des canalisations (30,34,38), qui s'étendent par endroits à l'intérieur du récipient sous pression (2), d'une tubulure (4) et d'un bloc de boîtier (7) qui est formé par le dispositif de soupape (6) et est monté directement sur la tubulure.

2. Dispositif suivant la revendication 1, caractérisé par le fait que la canalisation (38) qui est prévue à l'intérieur du récipient sous pression (2) et de la tubulure (4) pour réaliser une détente de pression, débouche dans une partie du récipient sous pression (2), dans laquelle est présente une pression statique essentiellement non influencée par le processus d'écoulement pendant l'évacuation de détente.

3. Dispositif suivant la revendication 2, présentant les caractéristiques suivantes :
a) la tubulure (4) se prolonge avec une forme tubulaire,
b) une ouverture (36) de détente de pression, qui est disposée dans la tubulure (4), est raccordée directement à un canal de détente de pression (34), qui est situé dans le bloc de boîtier (7),
c) à l'intérieur de la tubulure (4) s'étend un canal d'écoulement (42) pour le fluide devant être évacué par détente, ce canal étant séparé spatialement de l'ouverture de détente de pression (36) par un manchon (40) qui pénètre à l'intérieur du récipient sous pression (2).

4. Dispositif suivant la revendication 3, caractérisé par le fait que le dispositif de soupape (6) est raccordé radialement par bride à la tubulure (4) prolongée avec une forme tubulaire.

5. Dispositif suivant la revendication 4, caractérisé par le fait que plusieurs dispositifs de soupapes (6) sont raccordées radialement par brides à la tubulure (4).
